# EUROPÄISCHE PATENTSCHRIFT

(11) **EP 2 915 790 B1**
(45) Veröffentlichungstag und Bekanntmachung des Hinweises auf die Patenterteilung: **10.05.2017**
(21) Anmeldenummer: 14158082.9
(22) Anmeldetag: 06.03.2014
(51) Int. Cl.: C04B 28/26, C04B 14/04

(54) **Farbe und Verfahren zum Renovieren einer offenporigen Putzschicht**
Paint and method for renovating an open-pore plaster layer
Couleur et procédé de rénovation d'une couche d'enduit à pores ouverts

(43) Veröffentlichungstag der Anmeldung: 09.09.2015
(73) Patentinhaber: BASWA acoustic AG, 6283 Baldegg (CH)
(72) Erfinder: Sulzer, Eric, 8006 Zürich (CH); Hanisch, Bernhard, 5070 Frick (CH); Fructuoso, Edgar, 03003 Alicante (ES)
(74) Vertreter: Stocker, Kurt

(56) Entgegenhaltungen:
- EP-A2- 0 368 507
- WO-A1-2005/118726
- Basf Corporation: "Attagel Rheology modifiers Helping Make Products Better", Technical Bochure, 31. Dezember 2007 (2007-12-31), XP055125849, Florham Park, NJ Gefunden im Internet: URL:http://www.supmat.com/download/BASF/At tagel 11.21.2007.pdf [gefunden am 2014-06-30]
- Basf Corporation: "Attapulgite Colloidal Hydrated Magnesium Alumino-Silicate General Product Description", , 31. Dezember 2007 (2007-12-31), XP055125850, Florham Park, NJ Gefunden im Internet: URL:http://www.supmat.com/download/BASF/At tapulgite Final 11.15.2007.pdf [gefunden am 2014-06-30]
- Biofa Naturprodukte: "Technisches Merkblatt BIOFA Solimin Silikatfarbe 3051", , 17. März 2003 (2003-03-17), XP055125855, Gefunden im Internet: URL:http://www.biofa.de/objekte/tms/tm_305 1_1.pdf [gefunden am 2014-06-30]
- W. L. HADEN ET AL: "Attapulgite: Properties and Uses", CLAYS AND CLAY MINERALS, Bd. 10, Nr. 1, 2. Januar 1961 (1961-01-02) , Seiten 284-290, XP055125858, ISSN: 0009-8604, DOI: 10.1346/CCMN.1961.0100123

## Beschreibung

Die Erfindung bezieht sich auf eine Farbe nach dem Oberbegriff des Anspruches 1 und auf ein Verfahren nach dem Oberbegriff des Anspruches 13.

An Wänden und insbesondere an Decken von Räumen werden häufig Putzschichten angebracht. Das Putzmaterial wird gegebenenfalls direkt auf die Rohbau-Wände und -Decken aufgebracht. Wenn die Wände und Decken mit Platten belegt sind, ist es zum Ausbilden einer durchgehenden ebenen Innenfläche zweckmässig, eine Putzschicht auf die Platten aufzutragen. Die eingesetzten Platten sind ihrer Aufgabe entsprechend je verschieden aufgebaut. Es gibt beispielsweise vorbeschichtete Faserplatten mit einer gegen das Rauminnere gerichteten Putzlage. Nach der Montage der Platten werden die Fugen zwischen den Platten gefüllt und eine dünne ausgleichende Putzschicht aufgebracht. Die Putzschicht kann auch aus zwei oder mehr Lagen aufgebaut werden, wobei jede Lage der Putzschicht mit mindestens einer Putzmischungen mit einem Hauptkornanteil aufgebaut wird. Eine schallabsorbierende Wirkung über einen grossen Frequenzbereich wird von einem System mit einer Putzschicht auf Faserplatten erzielt, wenn sich offene bzw. durchgängige Poren über die gesamte Schichtdicke der Putzschicht erstrecken, also von der dem Raum zugewandten Oberfläche der Putzschicht bis zu dem an der Faserplatte haftenden Haftbereich der Putzschicht.

WO 2005/118726 A1 beschreibt Zusammensetzungen zum Beschichten von Wänden und Fassaden, welche den bei Wärmedämmverbundsystemen auftretenden Algen- und Pilzbefall mit einem photokatalytisch wirksamen Mittel hemmen. Die Renovation einer solchen Beschichtung ist nicht beschrieben.

Die Produktbeschreibungen der Basf Corporation: "Attagel Rheology modifiers" und "Attapulgite Colloidal Hydrated Magnesium Alumino-Silicate" beschreiben Produkte, welche als Verdickungsmittel und/oder Suspendiermittel eingesetzt werden können.

DE 196 14 296 C2 beschreibt eine Putzmischung, welche in der Putzschicht durch aneinander angelagerte, im Wesentlichen ähnlich grosse Körner verhältnismässig grosse Zwischenräume bzw. Poren erzielbar macht. In der ausgehärteten Putzschicht sind Poren ausgebildet, die eine gute Schallabsorption und auch eine gute thermische Isolation gewährleisten. Um ein Verstopfen der Poren zu verhindern, ist der körnige Anteil aus einem überwiegenden Hauptkornanteil und einem kleinen Feinkornanteil zusammengesetzt. Zudem wird durch die Verwendung eines kleinen Anteils an Bindemittel verhindert, dass die Poren durch das Bindemittel, insbesondere durch Bindemittelmembranen, verstopft werden. Es wird ein kleiner Anteil Kunstharz-Dispersionsbinder zusammen mit wenig Verdickungsmittel verwendet, damit auch bei geringer Bindermenge die zum stabilen Verbinden des engkörnigen Hauptkornanteils nötigen Fliesseigenschaften erzielt werden. Im ausgetrockneten Zustand bildet der Binder zusammen mit Feinanteil bei Kontaktstellen der Körner des Hauptkornanteils minimale Brücken zwischen diesen Körnern. Die Porosität der Putzschicht liegt im Bereich von 20 bis 50 Volumenprozent und gewährleistet kleine Strömungswiderstände durch die Putzschicht (80-240 Rayls). Der körnige Hauptkornanteil wird etwa von einem Marmorkorn mit einer engen Kornverteilung im Bereich von 0.1 bis 0.5mm gebildet. Mit dieser Korngrösse des körnigen Hauptkornanteils kann eine sehr glatt erscheinende Oberfläche erzielt werden, die einer Gipsoberfläche gleicht. Die zusammenhängenden bzw. offenen Poren haben Durchmessern, die etwas unterhalb der mittleren Korngrösse des körnigen Hauptkornanteils liegen. Eine helle Farbe der Oberfläche der ausgehärteten Putzschicht wird durch die Verwendung eines weissen Marmorkorns erzielt.

Wenn die Putzschicht auf einer Faserplatte angeordnet ist, gewährleisten die durch die Putzschicht führenden Poren eine Schallabsorption über den gesamten hörbaren Frequenzbereich. Versuche haben gezeigt, dass eine Schalldissipation innerhalb der Poren der Putzschicht und in der Faserplatte erreicht wird, wobei die Dämpfung der beiden Schichten bevorzugt mit unterschiedlichen Anteilen in verschiedenen Frequenzbereichen auftritt. Zudem ergibt sich durch die membranartige Schwingungsfähigkeit der Putzschicht an der Faserplatte auch noch eine deutliche Tieftonabsorption.

EP 1 484 294 B1 beschreibt beschichtete Bauplatten, bei denen das Plattenelement eine Fasermatte bzw. Faserplatte ist und die Putzschicht poröse Partikel, einen Silika-Binder, ein organisches Polymer und Xanthan als Verdickungsmittel aufweist, wobei die porösen Partikel Durchmesser im Bereiche von 0,1 bis 3mm, vorzugsweise von 0,5 bis 1 mm aufweisen. Es wird eine Ausführung beschrieben, bei der nebst den Hohlräumen in den porösen Partikeln auch zusammenhängende bzw. offene Poren mit Durchmessern etwas unterhalb der Partikeldurchmesser zwischen den Partikeln ausgebildet sind, was eine starke Schallabsorption gewährleistet. Um eine weisse Oberfläche zu erzielen, werden vorzugsweise poröse Partikel aus Tobermorit verwendet (beispielsweise Circosil). Nach dem Montieren der beschichteten Platten kann eine Putzmischung gemäss DE 196 14 296 C2 als Deckschicht aufgetragen werden, wobei dann die Poren bei der Oberfläche entsprechend der Korngrösse der Deckschicht etwas kleinere Querschnitte aufweisen als im Bereich der darunter liegenden Schicht mit den etwas grösseren porösen Partikeln.

Schmutz kann an die Oberfläche der offenporigen Putzschichten gemäss DE 196 14 296 C2 oder EP 1 484 294 B1 ausgehend von Benützern der damit versehenen Räume gelangen und/oder mit der Luft transportierte Schmutzteilchen führen zu Verschmutzungen. Der Schmutz deckt bei der Putzoberfläche zumindest Teilbereiche von Körnern ab. Bei den verschmutzten Körnern tritt die helle Farbe nicht mehr in Erscheinung, was zu einem beeinträchtigten Gesamteindruck der Putzoberfläche führt. Ein Reinigen mit Reinigungsflüssigkeit ist aufgrund der Porosität nicht erfolgversprechend, weil die Reinigungsflüssigkeit und die darin aufgenommenen Schmutzanteile durch die Poren in die Putzschicht eintreten können. Ein trockenes Abreiben oder Abschleifen der Putzschicht würde zu sichtbaren Unebenheiten der Oberfläche und zu Verstopfungen der Poren durch das abgeriebene Material führen. Das Entfernen der verschmutzten Putzschichten und das Auftragen von neuen Putzschichten ist sehr aufwändig. Wenn die offenporigen Putzschichten mit einer gängigen Farbe gestrichen werden, so werden die Poren an der Oberfläche der Putzschicht verschlossen und die Schallabsorbiereigenschaft der Putzschicht bzw. des Aufbaus mit Faserplatte und Putzschicht geht im Wesentlichen verloren.

Die erfindungsgemäss Aufgabe besteht nun darin eine Farbe und ein Verfahren zum Renovieren von offenporigen Putzschichten zu finden, so dass die gewünschte insb. die ursprüngliche Farbe wieder gleichmässig auf der ganzen Oberfläche in Erscheinung tritt und die zusammenhängenden Poren durch die Putzschicht im Wesentlichen offen bleiben. Die Schallabsorbierwirkung soll durch das Renovieren im Wesentlichen nicht verschlechtert werden.

Die Aufgabe wird durch eine Farbe mit den Merkmalen des Anspruches 1, bzw. durch ein Verfahren mit den Merkmalen des Anspruchs 13 gelöst. Die abhängigen Ansprüche beschreiben alternative bzw. vorteilhafte Ausführungsvarianten, welche weitere Aufgaben lösen.

Beim Lösen der Aufgabe wurde in einem ersten erfinderischen Schritt erkannt, dass keine Farben mit hohen Anteilen von Kunstharzbindern verwendet werden dürfen, weil diese die Poren der Putzschicht mit Membranen aus Kunstharzbinder verschliessen. Die erfindungsgemässe Renovierungsfarbe umfasst einen anorganischen Binder der auch mit einem hohen Anteil zugegeben werden kann, ohne dass sich beim Auftragen und Aushärten Membrane bilden, welche die Poren der Putzschicht verschliessen. Die Renovierungsfarbe soll vorzugsweise sowohl auf Putzschichten mit Kunstharzbindern als auch auf solchen mit mineralischen Bindern eingesetzt werden können. Dies kann gewährleistet werden, wenn der Binder zumindest einen Anteil eines anorganischen Binders auf der Basis von Alkali-Polysilikaten umfasst. Alkali-Polysilikate sind kristalline oder als Gemisch verschiedener Silicate glasartige (amorphe) Feststoffe bzw. in Wasser viskose Lösungen. Sie umfassen mindestens eines der Alkali-Metalle Lithium, Natrium, Kalium, Rubidium, Caesium oder Francium, wobei Alkali-Polysilikate mit Natrium und Kalium als Wasserglas am meisten verbreitet sind. Als Reinstoff sind Alkali-Polysilikate farblos. Beim Auftragen einer Renovierungsfarbe mit diesem Binder bleiben die Kunstharzbrücken der Putzschicht und damit die Stabilität einer Putzschicht mit minimalen Kunstharz-Binderanteilen unbeeinträchtigt bestehen.

Die bis heute am Markt anzutreffenden Silikatbeschichtungen lassen sich in Silikatfarben und Dispersionssilikatfarben unterteilen. Dispersionssilikatfarben enthalten neben Alkali-Polysilikaten bzw. Wasserglas noch ein organisches Bindemittel, üblicherweise eine Kunstharzdispersion. Aus diesem Grund werden Dispersionssilikatfarben auch als Organosilikatfarben bezeichnet. Nach DIN 18363 dürfen Dispersionssilikatfarben max. 5 Gewichtsprozent organische Bestandteile umfassen. Vorzugsweise wird nur ein noch kleinerer oder kein Anteil einer Kunstharzdispersion verwendet, weil dann eine Membranbildung und ein Verschliessen der Poren der porösen Putzschicht ausgeschlossen werden kann.

Gängige Silikatfarben bestehen nach DIN 18363 aus Kaliwasserglas und Pigmenten. Silikatfarben dürfen keine organischen Bestandteile, z.B. Kunststoffdispersion, enthalten. Es handelt sich dabei um Zweikomponentenprodukte, bestehend aus flüssigem Wasserglas (Binder) und einer pulverförmigen Pigmentfüllstoffmischung, welche erst kurz vor der Verarbeitung zusammengerührt werden, weil die Pigmentpartikel bei längeren Standzeiten sedimentieren und sich aneinander verfestigen, so dass die Farbe nicht mehr verwendet werden könnte. Für die bevorzugte Renovierungsfarbe ist eine Zweikomponentenlösung nicht geeignet, weil der Aufwand für das Mischen direkt vor dem Auftragen zu gross und die dabei erzielbare Produkte-Genauigkeit zu klein ist. Es muss also eine Silikatfarbe gefunden werden, welche im verarbeitungsbereiten Zustand lagerfähig ist.

DE 26 52 421 A1 beschreibt ein Bindemittel auf der Basis von Alkali-Polysilikaten, das aus einer Mischung von Natriumsilikat und/oder Kaliumsilikat mit Lithiumsilikat besteht. Bereits ein kleiner Anteil von Lithiumsilikat erhöht die Wasserfestigkeit im abgebundenen Zustand und gewährleistet einen etwas tieferen pH Wert. Zudem können die bei der Abbindung von Natriumwasserglas auftretenden Ausblühungen mit dem Anteil von Lithiumsilikat vermieden werden. Eine Renovierungsfarbe mit einem Anteil von Lithiumsilikat gewährleistet nach dem Abbinden eine einheitliche Farbwirkung.

Neben Alkali-Polysilikaten werden zur Formulierung einer Renovierungsfarbe noch Pigmente, Füllstoffe, verschiedene Additive und ein Stabilisator verwendet. Die Auswahl der weiteren Komponenten muss darauf abgestimmt sein, dass die Poren der Putzschicht nicht verschlossen werden.

Die Pigmente müssen so gewählt werden, dass auch diese die Poren der porösen Putzschicht nicht verschliessen, sondern lediglich als kleine Beschichtungsteile auf die bei der Oberfläche der Putzschicht angeordneten Körnern des Hauptkornanteils aufgetragen werden. Dies kann dadurch gewährleistet werden, dass die Grösse der Pigmente wesentlich kleiner ist als die Grösse der Körner des Hauptkornanteils der Putzschicht. Der Hauptanteil der Pigmentpartikel muss mindestens um den Faktor 10, vorzugsweise aber mindestens um den Faktor 50, im Wesentlichen um den Faktor 100, kleiner sein als die Körner mittlerer Grösse des Hauptkornanteils der Putzschicht, welche bei den verbreiteten Putzschichten eine Grösse von im Wesentlichen 0.3mm bzw. 300µm aufweisen. Die mittlere Grösse der Pigmente ist somit kleiner als 0.03mm bzw. 30µm, vorzugsweise kleiner als 0.006mm bzw. 6µm, insbesondere bei im Wesentlichen 0.001 bis 0.003mm bzw. 1 bis 3µm. Bevorzugt wird ein Pigment mit einer engen Korngrössenverteilung verwendet.

Nebst der richtigen Grösse müssen die Pigmente auch die gewünschte Farbe haben. Die verbreiteten porösen Putzschichten haben eine von deren Hauptkornanteil stammende helle bzw. weisse Farbe. Die bevorzugten Pigmente haben eine ähnlich helle bzw. weisse Farbe. Weil die nach der Renovierung von Auge wahrnehmbare Farbe als integrative Wirkung von vielen kleinen vom Auge nicht auflösbaren Teilflächen zu verstehen ist, kann mit einem etwas helleren Pigment in der Kombination mit durch die Verschmutzung etwas abgedunkelten Stellen auf den Körnern des Hauptkornanteils gesamthaft der ursprüngliche Farbton des Hauptkornanteil erzielt werden.

Die bevorzugten Pigmente werden von anorganischen Partikeln gebildet, weil diese mit den Alkali-Polysilikaten des Binders optimal zusammenwirken, insbesondere das Abbinden nicht beeinträchtigen. Es versteht sich von selbst, dass bei Putzschichten mit einer von weiss abweichenden Farbe der Körner des Hauptanteils entsprechend gefärbte Pigmentkörner eingesetzt werden können. Das Pigment kann als Feinkorn aus dem gleichen Material wie das Hauptkorn der Putzschicht bereitgestellt werden, beispielsweise als Feinanteil eines Marmorkorns, also eines Carbonatgesteins. Es können aber auch Silikate verwendet werden, beispielsweise ein Schichtsilikat in pulverisierter Form wie das Mineral Talk (Steatit, Magnesiumsilikathydrat mit der chemischen Zusammensetzung Mg₃[Si₄O₁₀(OH)₂]). Für eine besonders weisse Erscheinung kann auch ein Weisspigment aus Titandioxid zugegeben werden.

Ein Pigment das gut mit einem engen Korngrössenspektrum um die gewünschte Korngrösse und mit einer gewünschten Helligkeit bereitgestellt werden kann, besteht im Wesentlichen aus natürlich feinem mikrokristallinen CaCO₃, das beispielsweise unter der Produktbezeichnung IOKAL TYP 5C mit einer mittleren Korngrösse von im Wesentlichen 0.002mm bzw. 2µm und einem engen Kornbreitenspektrum erhältlich ist, insbesondere ist sichergestellt, dass 99.99 Gewichtsprozent der Körner maximale Durchmesser unterhalb von 0.04mm bzw. 40µm aufweisen. 90 Gewichtsprozent der Pigmentkörner sind kleiner als 0.005mm bzw. 5µm. Diese kleinen Pigmentkörner lagern sich an Oberflächen der Körner der porösen Putzschicht an und können die wesentlich grösseren Poren nicht verschliessen.

Neben den Pigmenten und dem Binder mit Alkali-Polysilikaten werden zur Formulierung einer Renovierungsfarbe noch ein Stabilisator bzw. Emulgator und gegebenenfalls insbesondere Additive mit spezifischen Wirkungen verwendet. Die Wahl des Stabilisators muss auf die speziellen Eigenschaften des gewählten Binders mit Alkali-Polysilikat und insbesondere auf die Pigmente abgestimmt sein. Zudem darf der Stabilisator die Poren einer zu renovierenden Putzschicht im Wesentlichen nicht verschliessen.

In einem zweiten erfinderischen Schritt wurde erkannt, dass ein Stabilisator bzw. ein Emulgator auf Silikatbasis die Pigmente von einem unauflösbaren Sedimentieren abhält und mit dem Alkali-Polysilikat des Binders vereinbar ist. Der Stabilisator wird von kleinen Teilchen auf Silikatbasis mit einer mittleren maximalen Ausdehnungen unterhalb von 3µm gebildet, die aufgrund ihrer Ladungsverteilung im Wasser kolloidal verteilt sind. Damit die Teilchen im Wasser als Kolloide wirken bzw. in einer kolloiden Verteilung verbleiben, müssen sie an ihren Oberflächen Ladungsverteilungen aufweisen und die mittlere maximale Ausdehnung der Teilchen muss unterhalb von 0.003mm bzw. 3µm liegen. Um solch kleine Teilchen zu erhalten, werden Silikatminerale zerkleinert. Beim Zerkleinern entstehen Stabilisator-Teilchen mit einem Spektrum von maximalen Ausdehnungen, wobei im Wesentlichen maximal 50% der Teilchen Ausdehnungen über der mittleren maximalen Ausdehnung aufweisen. Weil der Mittelwert sehr klein ist, sind auch die Ausdehnungen der grösseren Teilchen mit relevanten Anteilen noch sehr klein, sicherlich kleiner als 6µm. Besonders bevorzugt ist ein Stabilisator mit Magnesium Aluminium Silikat. Diese anorganischen Stabilisatoren sind mit Alkali-Polysilikat-Bindern und den bevorzugten Pigmenten kompatibel.

Diese erfindungsrelevanten kleinen Stabilisator-Teilchen haben maximale Ausdehnungen, die wesentlich kleiner sind als die Porendurchmesser einer zu renovierenden Putzschicht. Gängige Porendurchmessern liegen in Bereichen bei ca. 0.2mm und sind somit um einen Faktor im Bereich von 66 grösser als die mittlere maximale Ausdehnung der Stabilisator-Teilchen. Mit diesen Grössenverhältnissen kann ausgeschlossen werden, dass die Stabilisator-Teilchen beim Abbinden so angeordnet sind, dass sie Brücken über die Poren bilden.

Nach dem Auftragen dieser Renovierungsfarbe tritt die gewünschte insb. die ursprüngliche Farbe wieder gleichmässig auf der ganzen Oberfläche in Erscheinung und die zusammenhängenden Poren durch die Putzschicht sind im Wesentlichen immer noch offen. Die Schalldämmwirkung der porösen Putzschicht wird daher durch das Renovieren im Wesentlichen nicht verschlechtert. Die matte Oberfläche der porösen Putzschicht bleibt auch nach dem Auftragen der Renovierungsfarbe erhalten, was bei Farben gemäss dem Stande der Technik nicht der Fall wäre, weil diese eine speckigen Glanz erzeugen.

Bei einem bevorzugten Pigment liegt die mittlere Grösse der Pigment-Teilchen bei im Wesentlichen 1 bis 3µm und somit im gleichen Grössenbereich wie der mittlere Durchmessern der Silikat basierten Teilchen des Stabilisators. In der kolloidalen Verteilung der Teilchen des Stabilisators gibt es genügend grosse Zwischenräume, in denen die Pigment-Teilchen gehalten werden, so dass auch diese kolloidal verteilt sind. Weil die Pigment-Teilchen Grössen im Bereich von Kolloiden haben, braucht es nur eine kleine Einwirkung der Stabilisator-Teilchen um die Pigment-Teilchen in den Zwischenräumen zu halten.

Bei Stabilisatoren auf Silikatbasis bilden die Silikate kleine Teilchen mit Gitterstrukturen und in die Silikat-Strukturen aufgenommene Ionen erzeugen unterschiedliche elektrische Ladungsverteilungen entlang der Teilchen. Diese Ladungsverteilungen führen zu Wechselwirkungen zwischen Teilbereichen benachbarter Teilchen. Der Abstand zwischen den einzelnen Silikatteilchen kann aufgrund der zusammenwirkenden Ladungsverteilungen in verdünnten Lösungen relativ gross gehalten werden. Der Wert solcher Silikatteilchen als Stabilisatoren und Rheologiegeber basiert auf deren kollodialen Verteilung in Wasser. Die kollodiale Struktur verleiht den Teilchen einen Widerstand gegen den Strukturabbau. Feststoffe, insbesondere Pigmente, sind in der Struktur gefangen und isoliert bzw. in Suspension und dies auch bei geringer Viskosität. Die Stabilisierung der dispergierten Pigmente ist sogar in dünnflüssigen Systemen möglich, wo die Fliessfähigkeit wichtig ist. Ein Zusammenbacken von suspendierten Pigmenten kann verhindert werden. Wenn ein teilweises Absetzen der Pigmente eintritt, so ist es durch die Teilchen des Stabilisators beschränkt und die Pigmente können problemlos wieder dispergiert werden. Die Stabilisatoren auf Silikatbasis bilden keine irreversiblen Gele, wie manche organische Verdicker. Sie gewährleisten eine Suspendierung bei im Wesentlichen gleicher Viskosität.

Eine bevorzugte Ausführung eines Stabilisators auf Silikatbasis wird aus dem Mineral Palygorskit bzw. Attapulgit hergestellt, welches ein Schichtsilikat mit der chemischen Zusammensetzung (Mg,Al)₄[OH|(Si,Al)₄O₁₀]₂·(4+4)H₂O ist. Die in den runden Klammern angegebenen Elemente Magnesium und Aluminium bzw. Silicium und Aluminium können sich in der Formel jeweils gegenseitig vertreten (Substitution, Diadochie), stehen jedoch immer im selben Mengenverhältnis zu den anderen Bestandteilen des Minerals. Es kristallisiert im monoklinen Kristallsystem und bildet durchscheinende bis undurchsichtige, meist nadelförmige Kristalle, aber auch faserige bis massige Aggregate von weisser, gräulicher bis gelblicher oder graugrüner Farbe. In dünnen Schichten kann es auch farblos sein.

Palygorskit ist in die Klasse der Silikate und Germanate und dort in die Abteilung der Schichtsilikate (Phyllosilikate) eingeteilt. Diese Abteilung ist allerdings weiter unterteilt nach der Struktur der Silikatschichten, so dass das Mineral entsprechend seinem Aufbau in der Unterabteilung "Einfache tetraedrische Netze aus Sechsfach-Ringen, verbunden über oktaedrische Netze oder Bänder" zu finden ist, wo es nur noch zusammen mit Tuperssuatsiait und Yofortierit eine Gruppe bildet.

WO 02/00350 A1 beschreibt das Separieren und Dispergieren von Attapulgite-Teilchen, welche die gewünschten Anti-Setz-Eigenschaften aufweisen. Die nadelförmigen Kristalle haben sich bei der Entstehung clusterförmig aneinander angeordnet, so dass die Ladungsverteilungen neutralisiert wurden. Nach dem Auftrennen der Cluster in einzelne nadelförmige Kristalle können sich diese im Wasser entsprechend der Ladungsverteilungen auf Distanz anordnen.

In einer bevorzugten Ausführungsform wird ein Stabilisator mit Palygorskit bzw. Attapulgit in der im Handel unter dem Namen Acti-Gel 208 erhältlichen Form verwendet. In diesem Produkt haben die Kristallnadeln, bzw. nadelförmigen Teilchen, eine Länge bzw. eine maximale Ausdehnung im Bereich von 1µm bis 2.5µm, insbesondere von 1.5µm bis 2.0µm, und einen Durchmesser von im Wesentlichen 30 Angström bzw. 0.003µm. Bei diesen kleinen Teilchen treten Eigenschaften, die auf Grund der Masse der Teilchen auftreten, gegenüber den Eigenschaften aus der grossen spezifischen Oberfläche und der daran auftretenden Ladungsverteilungen zurück.

Ein weiterer möglicher Stabilisator mit Magnesium Aluminium Silikat wird aus Smektit Ton bzw. Bentonit hergestellt. Der Wert von hochreinen Smektiten, wie den Markenprodukten VEEGUM und VAN GEL, als Stabilisatoren und Rheologiegeber basiert auf deren kollodialen Verteilung in Wasser. Jeder Smektit Partikel ist zusammengesetzt aus tausenden von submikroskopisch kleinen Plättchen, sandwichartig aufgebaut, mit Wasser dazwischen. Die Oberflächen dieser Plättchen tragen eine negative Ladung, während die Seiten leicht positiv geladen sind. Die negative Ladung der Plättchen ist meist durch Natrium-Ionen aber auch durch geringe Mengen anderer anorganischer Kationen ausgeglichen. Diese ladungsausgleichenden Ionen sind auf den Plättchenoberflächen angeordnet. Da diese Ionen durch andere Kationen ersetzt werden können, werden diese als "austauschbar" bezeichnet. Ist der Smektit einmal hydratisiert, (d.h. die Plättchen sind getrennt) werden die leicht positiv geladenen Plättchenseiten durch die negativ geladenen Plättchenoberflächen angezogen. Die resultierende dreidimensionale Struktur, oft auch als Kartenhaus bezeichnet, baut sich umgehend auf. Die kollodiale Struktur verleiht dem Smektit dessen nützliche Eigenschaft, den Yield Value bzw. die Plastizität. Dieser bzw. diese ist ein Mass des Widerstandes gegen den Strukturabbau. Die kollodiale Struktur kann an verteilten Stellen Pigmente aufnehmen und eignet sich somit um Suspensionen zu stabilisieren.

Ein weiterer möglicher Stabilisator mit Stabilisator-Teilchen auf Silikatbasis wird aus Sepiolith hergestellt, also aus einem hydratisierten Magnesiumsilikat, welches in der Literatur häufig mit der Summenformel

Si₁₂Mg₈O₃₀(OH)₄(OH₂)S^{■}8H₂O

bzw. mit

Mg₄Si₆Oi₅(OH)₂·6H₂O

angegeben wird und der Gruppe der Phyllosilikate angehört. Der Sepiolith setzt sich zusammen aus 2 Schichten tetraedrischer Kieselerde, die über Sauerstoffatome mit einer oktaedrischen, unzusammenhängenden Mittelschicht aus Magnesiumatomen verbunden sind. Dieser Aufbau verleiht den Sepiolith-Partikeln eine mikrofaserartige Morphologie. Mittels Nassmahlen kann ein Produkt aus Teilchen mit einer mittleren maximalen Ausdehnungen unterhalb von 3µm bereitgestellt werden.

Die Teilchen des bevorzugten Stabilisators (Acti-Gel 208) sind nadelförmig und die bevorzugten Pigment-Teilchen (IOKAL TYP 5C) haben in drei orthogonalen Richtungen ähnliche Ausdehnungen. Weil die Ausdehnung der Stabilisator-Teilchen in der Nadelachse ähnlich gross ist, wie der mittlere Durchmesser der Pigment-Teilchen, und die Stabilisator-Teilchen in zwei Richtungen eine äusserst kleine Ausdehnung haben, umfasst ein einzelnes Pigment-Teilchen wesentlich, insb. ca. zehnmal, mehr Masse als ein Stabilisator-Teilchen. Bei den bevorzugten Renovierungsfarben liegt das Verhältnis zwischen dem Gesamtgewicht aller Stabilisator-Teilchen und dem Gesamtgewicht aller Pigment-Teilchen bei im Wesentlichen 0.10. Weil die Stabilisator-Teilchen je eine kleinere Masse haben als die Pigment-Teilchen, ergeben sich auch bei einem um den Faktor 10 kleineren Gesamtgewicht aller Stabilisator-Teilchen gegenüber dem Gesamtgewicht aller Pigment-Teilchen für beide Komponenten Teilchenzahlen in der gleichen Grössenordnung. Darum kann mit dem bevorzugten Stabilisator und den bevorzugten Gewichtsverhältnissen zwischen Stabilisator und Pigment eine kolloidale Verteilung der Stabilisator und der Pigmentteilchen gewährleistet werden.

Die Kombination des Alkali-Polysilikat-Binders mit dem anorganischen Stabilisator und dem anorganischen Pigment gewährleistet eine optimale Abbindung, bei der die Pigmentkörner bei der Oberfläche der Putzschicht gleichmässig verteilt an deren Körner angelagert werden. Beim Abbinden erfolgt als erste Reaktion die Gelbildung. Durch den Verlust des Wassers werden die Silikatteilchen mit den von den anorganischen Stabilisator-Teilchen verteilt gehaltenen Pigmentkörnern immer enger aneinander gepresst, bis es zur Kondensationsbindung kommt. Der Alkali-Polysilikatbinder, die Pigmente sowie der Stabilisator der Silikatfarbe und mineralische Anteile der Putzschicht verbinden sich zu einer unlöslichen anorganischen Matrix.

Das beschriebene Abbinden an den Oberflächen der Körner der Putzschicht wird von der tiefen Viskosität der Farbe unterstützt, welche vom anorganischen Binder und vom Stabilisator auf Silikatbasis gewährleistet wird. Nebst der guten Gesamtanbindung an die Körner der Putzschicht sind das Offenbleiben der Poren der Putzschicht und die ungestörte Farbwirkung der Pigmente Vorteile, die mit der erfindungsgemässen Zusammensetzung der Farbe erzielt werden.

Für eine erfinderische Renovierungsfarbe ist im Zusammenspiel mit dem Binder, dem Pigment und dem Stabilisator die richtige Wahl des Wasseranteils sehr wichtig. Dabei muss der Wasseranteil, insbesondere im Verhältnis zum Pigmentanteil, so gewählt werden, dass nach dem Auftrag der Renovierungsfarbe auf eine poröse Putzschicht die Poren nicht verschlossen sind und die gewünschte aufgefrischte Farbe gleichmässig über die ganze Oberfläche der Putzschicht in Erscheinung tritt. Aus Versuchen ist hervorgegangen, dass die Poren offen bleiben und die Färbung gleichmässig erscheint, wenn der Wasseranteil hoch ist, bzw. wenn eine vorgegebene Menge von Pigment-Teilchen in einer grossen Menge Wasser aufgenommen ist. Die Renovierungsfarbe muss beim Auftragen einen Wasseranteil von mindestens 33 Gewichtsprozent am Gesamtgewicht der Farbe umfassen und gleichzeitig darf der Pigmentanteil maximal 25 Gewichtsprozent am Gesamtgewicht der Farbe betragen, so dass das Gewichtsverhältnis zwischen Pigment und Wasser maximal bei 0.75 liegt. Wenn im Verhältnis zum Wasser mehr Pigment eingesetzt würde, so könnten auch Anhäufungen der sehr kleinen Pigment-Teilchen die wesentlich grösseren Porenöffnungen einer porösen Putzschicht verschliessen.

Damit sich die Pigment-Teilchen im Wesentlichen nur als dünne Beschichtung der Körner der Putzschicht festsetzen, wird nebst der Wahl eines Gewichtsverhältnisses zwischen Pigment und Wasser unterhalb von 0.75 zusätzlich ein airless spray-Verfahren mit hohem Druck beispielsweise 150bar zum Auftragen eingesetzt. Versuche haben gezeigt, dass das manuelle Auftragen einer Renovierungsfarbe mit Roller oder Pinsel bereits zu einem starken Verschliessen der Poren führen kann, wenn das Pigment/Wasser-Gewichtsverhältnis wenig unter der angegebenen Grenze liegt, bzw. wenn der Pigment-Anteil sehr gross ist. Bei einem mechanischen Auftrag können dann die Pigmente in den Poreneingängen verdichtet werden. Bei einem airless spray-Verfahren führt das Aufprallen der Farbe, bzw. der mit dem Spritzen verbundene Farbfluss dazu, dass die Porenöffnungen offen gehalten werden und die Farbe die Körner der Putzschicht an ihrer Oberfläche umströmt, so dass die Pigment-Teilchen über die Körner verteilt werden.

Das heisst also, dass die richtige Wahl des Auftragsverfahrens, nämlich eines airless spray-Verfahrens, zumindest bei einem hohen Pigment/Wasser-Gewichtsverhältnis entscheidend ist. Es versteht sich von selbst, dass im Wesentlichen für die grossen zusammenhängenden Flächen das airless spray-Verfahren eingesetzt wird, wobei diese Flächen auch zweimal gespritzt werden können. Kleine und speziell angeordnete Bereiche einer zu renovierenden Putzschicht können mit dem Pinsel gestrichen werden. Es muss aber darauf geachtet werden, dass nur wenig Farbe aufgetragen wird, bzw. diese nicht in den Poreneingängen verdichtet wird.

Das bevorzugte Gewichtsverhältnis zwischen Pigment und Wasser liegt im Wesentlichen bei 0.62. Mit diesem Verhältnis kann bereits mit einmaligem Farbauftrag ein gutes Farbresultat ohne störenden Porenverschluss erzielt werden und ein zweiter Farbauftrag ist auch noch ohne inakzeptablen Porenverschluss möglich.

Wenn die Renovierungsfarbe für poröse Beschichtungen mit kleinen Poren und damit einer erhöhten Gefahr der Porenverstopfung verwendet werden soll, so kann auch noch eine Renovierungsfarbe mit einem minimalen Gewichtsverhältnis zwischen Pigment und Wasser von im Wesentlichen 0.12 eingesetzt werden. Wenn das Verhältnis noch kleiner gewählt wird, ist die Deckkraft eines Farbauftrags zu klein.

Das heisst also, dass bei einer erfinderischen Renovierungsfarbe das Gewichtsverhältnis zwischen Pigment und Wasser im Bereich von 0.12 bis 0.75 liegt, vorzugsweise bei im Wesentlichen 0.62.

Damit die aufgetragene Renovierungsfarbe in genügendem Umfang an der Putzschicht verbleibt und die Pigmente an die Körner der Putzschicht gebunden werden, muss ein minimaler Binderanteil eingesetzt werden. Bei gebrauchsfertigen Bindern auf der Basis von Alkali-Polysilikaten sind die Alkali-Polysilikate bereits in Wasser gelöst. Als Gewicht des Binderanteils soll nun im Wesentlichen das Gewicht der gelösten Alkali-Polysilikate verwendet werden. Bei einem handelsüblichen in Wasser gelösten Alkali-Polysilikat Binder ergibt sich aus der Dichte von 1.4g/ml, dass die Alkali-Polysilikate ca. 30% des Gewichtes der Lösung ausmachen. Aus den durchgeführten Versuchen geht hervor, dass das minimale Gewichtsverhältnis zwischen dem Alkali-Polysilikat-Anteil des Binders und dem Wasser-Anteil der Renovierungsfarbe bei im Wesentlichen 0.07 liegt. Dieser kleine Binderanteil ist bei einem kleinen Gewichtsverhältnis zwischen Pigment und Wasser (im Bereich gegen 0.12) zweckmässig. Bei einem bevorzugten und auch bei einem maximalen Gewichtsverhältnis zwischen Pigment und Wasser wird ein Gewichtsverhältnis zwischen dem Alkali-Polysilikat-Anteil des Binders und dem Wasser-Anteil von im Wesentlichen 0.29 verwendet. Das Gewichtsverhältnis zwischen dem Alkali-Polysilikat-Anteil des Binders und dem Pigment-Anteil liegt im Bereich von 0.59 bis 0.39, wobei dieses Verhältnis mit zunehmendem Pigment-Anteil abnimmt und bei einer bevorzugten Ausführung im Wesentlichen bei 0.47 liegt. Das heisst, dass das Gewicht der zugefügten Alkali-Polysilikate des Binders grob zwischen 2/3 und 1/3 des Pigmentgewichts liegt, bei der bevorzugten Ausführung bei ca. 1/2.

Damit die Pigmente der Renovierungsfarbe genügend gut in der Farbe stabilisiert sind bzw. nicht verklebend sedimentieren, muss ein minimaler Stabilisatoranteil eingesetzt werden. Bei gebrauchsfertigen Stabilisatoren auf Silikatbasis, vorzugsweise mit Magnesium Aluminium Silikat ist das Silikat bereits in Wasser emulgiert und umfasst vorzugsweise das pulverförmige Markenprodukt Acti-Gel 208, wobei das Stabilisator-Gewicht aus 30% Acti-Gel 208 und 70% Wasser besteht. Als Gewicht des Stabilisator-Anteils soll nun im Wesentlichen das Gewicht des Stabilisator-Silikats, vorzugsweise des Magnesium Aluminium Silikats, verwendet werden. Aus den durchgeführten Versuchen geht hervor, dass das Gewichtsverhältnis zwischen dem Silikat-Anteil des Stabilisators und dem Pigment-Anteil der Renovierungsfarbe bei im Wesentlichen 0.10 liegt. Es muss also ein Stabilisator-Silikat-Anteil mit einem Gewicht von ca. 10% des Pigmentgewichtes eingesetzt werden.

Um spezifische Wirkungen zu erzielen, werden der Renovierungsfarbe gegebenenfalls entsprechende Additive zugegeben.

Wenn bei der Renovierung einer porösen Beschichtung mit einem Kunstharzbinder der Brandschutz verbessert werden soll, so kann beispielsweise als Additiv Aluminiumhydroxid insb. das Markenprodukt APYRAL 24 zugefügt werden.

Wenn bei der Renovierung einer porösen Beschichtung die Farbqualität spezifisch verbessert werden soll, so kann nebst den bereits beschriebenen Pigmenten noch ein Additiv zur glanzfreien Aufhellung beigegeben werden, beispielsweise ein Natrium-Aluminosilikat-Pulver, insbesondere das Markenprodukt Zeolex 330.

Für die Gewichtsanteile der einzelnen Komponenten am Gesamtgewicht der Renovierungsfarbe ergeben sich folgende Bereiche:

| | |
|---|---|
| Wasser | 33 % bis 70 % |
| Alkali-Polysilikate des Binders | 5 % bis 10 % |
| Silikat des Stabilisators | 0.9 % bis 2.7 % |
| Pigment | 9 % bis 25 % |
| Aluminiumhydroxid-Pulver | 0 % bis 2 % |
| Natrium-Aluminosilikat | 0 % bis 5 % |

## Patentansprüche

1. Farbe zum Renovieren einer offenporigen Putzschicht, wobei die Farbe Wasser, einen anorganischen Binder auf der Basis von Alkali-Polysilikaten, ein von Teilchen gebildetes Pigment sowie einen Stabilisator umfasst und der Stabilisator ein unauflösbares Sedimentieren der Pigment-Teilchen verhindert, **dadurch gekennzeichnet, dass** der Stabilisator von kleinen Stabilisator-Teilchen auf Silikatbasis mit einer mittleren maximalen Ausdehnungen unterhalb von 3µm gebildet wird, wobei die Stabilisator-Teilchen aufgrund ihrer Ladungsverteilung im Wasser kolloidal verteilt sind.

2. Farbe nach Anspruch 1, **dadurch gekennzeichnet, dass** der Stabilisator Magnesium Aluminium Silikat umfasst.

3. Farbe nach Anspruch 2, **dadurch gekennzeichnet, dass** der Stabilisator nadelförmige Teilchen umfasst, die aus dem Mineral Palygorskit bzw. Attapulgit hergestellt sind, wobei die nadelförmigen Teilchen vorzugsweise Längen im Bereich von 1 bis 2.5µm und insbesondere einen Durchmesser von 30 Angström aufweisen.

4. Farbe nach einem der Ansprüche 1 bis 3, **dadurch gekennzeichnet, dass** die mittlere Grösse der Pigment-Teilchen kleiner als 30µm ist, vorzugsweise kleiner 6µm ist, insbesondere bei im Bereich von 1 bis 3µm liegt.

5. Farbe nach Anspruch 4, **dadurch gekennzeichnet, dass** das Pigment anorganische Pigment-Teilchen umfasst, vorzugsweise ein feinkörniges Pulver aus einem Carbonatmineral, beispielsweise Marmor, und/oder aus einem Silikatmineral, beispielsweise Talk bzw. Magnesiumsilikathydrat, und/oder aus Titandioxid.

6. Farbe nach Anspruch 5, **dadurch gekennzeichnet, dass** das Pigment natürlich feines mikrokristallines CaCO₃ umfasst, das eine mittlere Korngrösse von 2µm und ein enges Kornbreitenspektrum aufweist, wobei 99.99 Gewichtsprozent der Pigment-Teilchen maximale Durchmesser unterhalb von 40µm und 90 Gewichtsprozent der Pigment-Teilchen maximale Durchmesser unterhalb von 5µm aufweisen.

7. Farbe nach einem der Ansprüche 1 bis 6, **dadurch gekennzeichnet, dass** der anorganische Binder aus einer Mischung von Natriumsilikat und/oder Kaliumsilikat mit Lithiumsilikat besteht.

8. Farbe nach einem der Ansprüche 1 bis 7, **dadurch gekennzeichnet, dass** die Farbe beim Auftragen einen Wasseranteil von mindestens 33 Gewichtsprozent am Gesamtgewicht der Farbe umfasst und der Pigmentanteil maximal 25 Gewichtsprozent am Gesamtgewicht der Farbe beträgt, wobei das Gewichtsverhältnis zwischen Pigment und Wasser maximal bei 0.75, vorzugsweise bei 0.62 und insbesondere über 0.12 liegt.

9. Farbe nach einem der Ansprüche 1 bis 8, **dadurch gekennzeichnet, dass** das Gewichtsverhältnis zwischen dem Alkali-Polysilikat-Anteil des Binders und dem Wasser-Anteil der Farbe mindestens bei 0.07 vorzugsweise aber bei 0.29 liegt und dass das Gewichtsverhältnis zwischen dem Alkali-Polysilikat-Anteil des Binders und dem Pigment-Anteil im Bereich von 0.59 bis 0.39, vorzugsweise bei 0.47 liegt, wobei dieses Verhältnis mit zunehmendem Pigment-Anteil abnimmt.

10. Farbe nach einem der Ansprüche 1 bis 9, **dadurch gekennzeichnet, dass** das Gewichtsverhältnis zwischen dem Silikat-Anteil des Stabilisators und dem Pigment-Anteil bei 0.10 liegt.

11. Farbe nach einem der Ansprüche 1 bis 10, **dadurch gekennzeichnet, dass** die Gewichtsanteile der einzelnen Komponenten am Gesamtgewicht der Farbe in folgenden Bereichen liegen:
| | |
|---|---|
| Wasser | 33 % bis 70 % |
| Alkali-Polysilikate des Binders | 5 % bis 10 % |
| Silikat des Stabilisators | 0.9 % bis 2.7 % |
| Pigment | 9% bis 25 % |

12. Farbe nach einem der Ansprüche 1 bis 11, **dadurch gekennzeichnet, dass** die Farbe weitere Zusätze mit Gewichtsanteile am Gesamtgewicht der Farbe in folgenden Bereichen umfasst
| | |
|---|---|
| Aluminiumhydroxid-Pulver | 0 % bis 2 % |
| Natrium-Aluminosilikat | 0 % bis 5 % |

13. Verfahren zum Renovieren einer offenporigen Putzschicht, **dadurch gekennzeichnet, dass** eine Farbe gemäss einem der Ansprüche 1 bis 12 mit einem airless spray-Verfahren, vorzugsweise mit 150bar Druck aufgetragen wird.

## Claims

1. A paint for renovating an open-pored plaster layer, wherein the paint comprises water, an inorganic binder on an alkali polysilicate base, a pigment composed of particles as well as a stabiliser and the stabiliser prevents an insoluble sedimentation of the pigment particles, **characterised in that** the stabiliser is composed of small stabiliser particles on a silicate base comprising an average maximum expansion of below 3 µm, wherein the stabiliser particles are colloidally dispersed in the water on the basis of their charge distribution.

2. The paint according to claim 1, **characterised in that** the stabiliser comprises magnesium aluminium silicate.

3. The paint according to claim 2, **characterised in that** the stabiliser comprises needle-shaped particles, which are produced from the mineral palygorskite or attapulgite, respectively, wherein the needle-shaped particles preferably have lengths in the range of 1 to 2.5 µm and in particular have a diameter of 30 Angstrom.

4. The paint according to any one of claims 1 to 3, **characterised in that** the average size of the pigment particles is smaller than 30 µm, preferably smaller than 6 µm, in particular lies in the range of 1 to 3 µm.

5. The paint according to claim 4, **characterised in that** the pigment comprises inorganic pigment particles, preferably a fine-grained powder of a carbonate mineral, for example marble, and/or of a silicate mineral, for example talc or magnesium silicate hydrate, respectively, and/or of titanium dioxide.

6. The paint according to claim 5, **characterised in that** the pigment comprises naturally fine microcrystalline CaCO₃, which has an average grain size of 2 µm and a narrow grain width spectrum, wherein 99.99 percent by weight of the pigment particles have maximum diameters of below 40 µm and 90 percent by weight of the pigment particles have maximum diameters of below 5 µm.

7. The paint according to any one of claims 1 to 6, **characterised in that** the inorganic binder consists of a mixture of sodium silicate and/or potassium silicate with lithium silicate.

8. The paint according to any one of claims 1 to 7, **characterised in that**, upon application, the paint comprises a water share of at least 33 percent by weight of the total weight of the paint and the pigment share is maximally 25 percent by weight of the total weight of the paint, wherein the weight ratio between pigment and water is maximally 0.75, preferably 0.62 and in particular above 0.12.

9. The paint according to any one of claims 1 to 8, **characterised in that** the weight ratio between the alkali polysilicate share of the binder and the water share of the paint is at least 0.07, but preferably 0.29 and that the weight ratio between the alkali polysilicate share of the binder and the pigment share lies in the range of 0.59 to 0.39, preferably is 0.47, wherein this ratio decreases as the pigment share increases.

10. The paint according to any one of claims 1 to 9, **characterised in that** the weight ratio between the silicate share of the stabiliser and the pigment share is 0.10.

11. The paint according to any one of claims 1 to 10, **characterised in that** the percentages by weight of the individual components of the total weight of the paint lie in the following ranges:
| | |
|---|---|
| water | 33% to 70% |
| alkali polysilicate of the binder | 5% to 10% |
| silicate of the stabiliser | 0.9% to 2.7% |
| pigment | 9% to 25%. |

12. The paint according to any one of claims 1 to 11, **characterised in that** the paint comprises further additions with percentages by weight of the total weight of the paint in the following ranges
| | |
|---|---|
| aluminium hydroxide powder | 0 % to 2% |
| sodium aluminosilicate | 0% to 5% |

13. A method for renovating an open-pored plaster layer, **characterised in that a** paint according to any one of claims 1 to 12 is applied by means of an airless spray method, preferably at a pressure of 150 bar.

## Revendications

1. Couleur de rénovation d'une couche d'enduit à pores ouverts, dans lequel la couleur comprend de l'eau, un liant anorganique à base de polysilicates d'alcali, un pigment composé de particules ainsi qu'un stabilisant, et le stabilisant empêche une sédimentation indissoluble des particules de pigment, **caractérisée en ce que** le stabilisant est formé de petites particules de stabilisant à base de silicates avec des dimensions moyennes maximales inférieures à 3 µm, dans lequel les particules de stabilisant sont dispersées de façon colloïdale en raison dé leur distribution de charge dans l'eau.

2. Couleur selon la revendication 1, **caractérisée en ce que** le stabilisant comprend du magnésium aluminium silicate.

3. Couleur selon la revendication 2, **caractérisée en ce que** le stabilisant comprend des particules en forme d'aiguilles qui sont fabriquées à partir du minéral palygorskite, respectivement attapulgite, dans lequel les particules en forme d'aiguilles présentent de préférence des longueurs dans la plage de 1 à 2,5 µm et en particulier un diamètre de 30 Angström.

4. Couleur selon l'une des revendications 1 à 3, **caractérisée en ce que** la grandeur moyenne des particules de pigment est inférieure à 30 µm, de préférence inférieure à 6 µm, est située en particulier dans la plage de 1 à 3 µm.

5. Couleur selon la revendication 4, **caractérisée en ce que** le pigment comprend des particules de pigment anorganiques, de préférence une poudre à grains fins, d'un minéral de carbonate, par exemple du marbre, et/ou d'un minéral de silicate, par exemple du talc, respectivement de l'hydrate de silicate de magnésium et/ou en dioxyde de titane.

6. Couleur selon la revendication 5, **caractérisée en ce que** le pigment comprend du CaCO₃, qui présente une grosseur de grain moyenne de 2 µm et un spectre de largeur de grain étroit, dans lequel 99,99 pourcents en poids des particules de pigment présentent un diamètre maximal inférieur à 40 µm et 90 pourcents en poids des particules de pigment présentent un diamètre maximal inférieur à 5 µm.

7. Couleur selon l'une des revendications 1 à 6, **caractérisée en ce que** le liant anorganique est composé d'un mélange de silicate de sodium et/ou de silicate de potassium avec du silicate de lithium.

8. Couleur selon l'une des revendications 1 à 7, **caractérisée en ce que** la couleur, lors de l'application, a une teneur en eau d'au moins 33 pourcents en poids du poids total de la couleur et la teneur en pigments fait au maximum 25 pourcents en poids du poids total de la couleur, dans lequel le rapport pondéral entre le pigment et l'eau est au maximum de 0,75, de préférence de 0,62 et en particulier supérieur à 0,12.

9. Couleur selon l'une des revendications 1 à 8, **caractérisée en ce que** le rapport pondéral entre la teneur en polysilicates d'alcali du liant et la teneur en eau de la couleur est au moins de 0,07, mais est de préférence de 0,29 et que le rapport pondéral entre la teneur en polysilicates d'alcali du liant et la teneur en pigments est situé dans la plage de 0,59 à 0,39, est de préférence de 0,47, dans lequel ce rapport décroît à mesure que la teneur en pigments augmente.

10. Couleur selon l'une des revendications 1 à 9, **caractérisée en ce que** le rapport pondéral entre la teneur en silicates du stabilisant et la teneur en pigments est de 0,10.

11. Couleur selon l'une des revendications 1 à 10, **caractérisée en ce que** les teneurs en poids des différents composants sur le poids total de la couleur sont situées dans les plages suivantes :
| | |
|---|---|
| eau | 33 % à 70 % |
| polysilicate d'alcali du liant | 5 % à 10 % |
| silicate du stabilisant | 0,9 % à 2,7 % |
| pigment | 9 % à 25 % |

12. Couleur selon l'une des revendications 1 à 11, **caractérisée en ce que** la couleur comprend d'autres additifs avec des teneurs en poids sur le poids total de la couleur dans les plages suivantes :
| | |
|---|---|
| poudre d'hydroxyde d'aluminium | 0 % à 2 % |
| aluminosilicate de sodium | 0 % à 5 % |

13. Procédé de rénovation d'une couche d'enduit à pores ouverts, **caractérisé en ce qu'**une couleur selon l'une des revendications 1 à 12 est appliquée avec un procédé airless spray, de préférence à une pression de 150 bar.
